# EUROPÄISCHE PATENTSCHRIFT

(11) **EP 4 365 874 B1**
(45) Veröffentlichungstag und Bekanntmachung des Hinweises auf die Patenterteilung: **16.09.2026**
(21) Anmeldenummer: 23205737.2
(22) Anmeldetag: 25.10.2023
(51) Int. Cl.: G09B 21/00, A61H 3/00

(54) **TAKTILES BODENLEITSYSTEM ZUR ORIENTIERUNG VON BLINDEN UND SEHBEHINDERTEN MENSCHEN**
TACTILE GROUND GUIDANCE SYSTEM FOR ORIENTING BLIND AND VISUALLY IMPAIRED PERSONS
SYSTÈME TACTILE DE GUIDAGE AU SOL POUR ORIENTER DES PERSONNES AVEUGLES ET MALVOYANTES

(30) Priorität: 02.11.2022 DE 202022106147 U
(43) Veröffentlichungstag der Anmeldung: 08.05.2024
(73) Patentinhaber: BARRIEREFREIHEIT GmbH Leitsysteme für blinde und seheingeschränkte Menschen, 08340 Schwarzenberg/Erzgeb (DE)
(72) Erfinder: SCHOTT; Ivonne, 08340 Schwarzenberg/Erzgebirge (DE); STOCKMAR, Tino, 08315 Lauter-Bernsbach (DE)
(74) Vertreter: Scheit, Christian Wolfgang

(56) Entgegenhaltungen:
- CN-Y- 200 971 462
- DE-A1- 102011 077 619
- JP-A- 2009 014 263
- KR-A- 20080 057 801
- US-A1- 2002 114 926
- US-A1- 2007 042 159
- US-A1- 2022 259 868

## Beschreibung

Die Erfindung betrifft ein taktiles Bodenleitsystem zur Orientierung von blinden und sehbehinderten Menschen, wobei das Bodenleitsystem flächige Leitelemente aufweist und diese Leitelemente eine Oberseite und eine Auflagefläche aufweisen, wobei an der Oberseite verschiedenartige, von blinden und sehbehinderten Menschen taktil erfassbare Erhebungen ausgebildet sind und wobei die Leitelemente mit der Auflagefläche auf einem zu markierenden Boden aufliegen.

Der Leitgedanke der UN-Behindertenrechtskonvention (BRK), ist die Verwirklichung der inklusiven Gesellschaft, die gleichberechtigte Teilhabe behinderter Menschen am öffentlichen und gesellschaftlichen Leben fördert.

Grundlage hierfür gibt das Übereinkommen über die Rechte von Menschen mit Behinderungen (UN-Behindertenrechtskonvention). Es ist ein internationales Menschenrechtsabkommen, das 2006 von der UNO-Generalversammlung verabschiedet und 2009 in Deutschland rechtskräftig wurde.

Zweck dieses Übereinkommens ist es, den vollen und gleichberechtigten Genuss aller Menschenrechte und Grundfreiheiten durch alle Menschen mit Behinderungen zu fördern, zu schützen und zu gewährleisten und die Achtung der ihnen innewohnenden Würde zu fördern (Auszug, Artikel 1).

Die Erfindung bezieht sich auf ein Bodenleitsystem, dass es blinden und sehbehinderten Menschen ermöglicht, öffentliche und nichtöffentliche Gebäude, Einrichtungen und Plätze zu begehen, um eine Räumlichkeit oder Objekte selbstständig zu erreichen, ohne die Hilfe Dritter in Anspruch nehmen zu müssen. Als Vorgabe dient hierfür das Barrierefreie Bauen nach DIN 18040-1 - 18040-3). Bodenleitsysteme bestehen aus flächigen Bodenleitelementen. Eine Oberseite dieser flächigen Leitelemente ist mit verschiedenartigen Erhebungen ausgebildet, die von blinden und sehbehinderten Menschen taktil erfasst werden können. Mit einer Auflagefläche liegen die flächigen Leitelemente auf dem zu markierenden Boden auf.

Bisher wurden Leitsysteme immer fest installiert, d. h. entsprechende Indikatoren nach DIN 32984 entweder mit der Auflagefläche auf den Bodenuntergrund geklebt oder in den Bodenbelag und Estrich mittels Schraubens oder Lochbohrung eingebracht. Das Material der Bodenindikatoren besteht dabei vorwiegend aus verschiedenen Kunststoffen, Teppich/ Baumwolle, Aluminium, Messing, oder Edelstahl). Diese müssen aber fix auf den Boden der Wegstrecken befestigt sein, um das es beim Abtastastvorgang mit dem z. Bsp. Langstock nicht zu Ablösungen und so zu Fehlinformationen, oder Unfällen kommen kann.

In oder an historischen Gebäuden können oder dürfen oftmals aus optischen, ästhetischen, architektonischen oder denkmalgeschützten Gründen das Aufbringen eines fest verlegten Bodenleitsystems oder einzelner Indikatoren nicht erfolgen. Ebenso betrifft dies Gebäude, in denen die Räumlichkeiten einer wechselnden Nutzung unterliegen, oder Interimslösungen, wegen z. Bsp. Umbauten benötigen.

Weiterhin hat sich in der Praxis gezeigt, dass sich bei fest installierten Systemen in Gebäuden Veränderungen ergeben können. Räumlichkeiten wechseln ihre Nutzung. Gerade für Museen oder andere kulturelle Einrichtungen stellt sich oft die Frage, wie beispielsweise für Sonderausstellungen ein Bodenleitsystem für einen begrenzten Zeitraum bereitgestellt werden kann.

Fest installierte Systeme können nicht einfach verändert oder umgestaltet werden, da das Entfernen von Verschraubungen sowie das Verfüllen verbleibender Löcher aufwendig ist.

Tiefziehfolien, Bodenmatten, Trägermaterialien und/oder Bodenindikatoren, welche beispielsweise im 3D-Druckverfahren erstellt wurden, erfüllen nicht in allen Punkten die genormte Verwendbarkeit der Barrierefreiheit für blinde und seheingeschränkte Menschen.

Elemente eines geklebten Leitsystems sind nicht wieder verwendbar, da die Klebeschicht nicht vollständig vom Boden gelöst werden kann oder die Klebeschicht nach dem Entfernen vom Boden ihr ursprüngliche Haftkraft verloren hat. Darüber hinaus muss der Boden nach dem Entfernen eines geklebten Leitsystems aufwendig rekonstruiert werden. Die Entfernung vorhandener Leitsysteme ist zudem mit erheblichem Zeit-, Material- und Kostenaufwand verbunden.

Aus der KR 2008 0057801 A sind flächige Leitelemente bekannt, welche an der Unterseite Saugnäpfe aufweisen. Diese Saugnäpfe sind an der Unterseite in Aussparungen eingelassen und darin befestigt.

In der US 2007/042159 A1 werden auf einer Bodenfläche verlegte Bodenmatte beschrieben. In einer Ausführung besteht ein elastischer Abschnitt der Bodenmatte aus einem Raumabschnitt und einer großen Anzahl von Vorsprüngen. Der Raumabschnitt ist als nach oben gerichtete Vertiefung mit einer vorgegebenen Tiefe ausgebildet, die in der Installationsoberflächenseite der Matte ausgebildet ist. Die Vorsprünge ragen nach unten in den Raumabschnitt hinein und ihre unteren Endflächen stehen in elastischem Kontakt mit der Bodenoberfläche.

Der Erfindung liegt die Aufgabe zu Grunde, die angesprochenen Nachteile bekannter taktiler Bodenleitsysteme zu beheben und eine Lösung zu schaffen, die es ermöglicht, Bestandteile taktiler Bodenleitsysteme so auf dem Boden einer Räumlichkeit aufzubringen, dass es bei der Veränderung der Einsatzbedingungen und Verhältnisse möglich ist, Bestandteile des Leitsystems bzw. des gesamten Leitsystems zu entfernen und entsprechend den veränderten Verhältnissen angepasst neu zu verlegen und damit die Bestandteile des taktilen Bodenleitsystems wiederzuverwenden.

Die Aufgabe wird erfindungsgemäß durch den im Anspruch 1 definierten Gegenstand gelöst. Dabei ist die Auflagefläche der flächigen Leitelemente des Bodenleitsystems mit Mikrosaugnäpfen versehen , wobei diese Mikrosaugnäpfe auf dem Boden aufliegen.

Durch die Mikrosaugnäpfe wird zum einen ein fester Halt der Leitelemente auf dem zu markierenden Boden sichergestellt. Zum anderen sind die Leitelemente in einfacher Weise wieder vom Boden lösbar, ohne dass Rückstände auf dem Boden verbleiben. Die Leitelemente sind nach dem Lösen vom Boden wiederverwendbar, sodass sie im Bedarfsfall auf einen anderen Bodenbereich, ohne Fachkenntnisse und weiteren Materialeinsatz, erneut verlegt werden können.

Das erfindungsgemäße Bodenleitsystem kann jederzeit und kurzfristig verlegt oder geändert werden. Die Leitelemente sind rutschfest und bieten so eine Grundlage für ein taktiles und visuelles Leitsystem in einem Gebäude. Vorteil auch hier ist, dass diese Variante wesentlich günstiger ist als ein fest aufgebrachtes Bodenleitsystem. Weiterhin ist das erfindungsgemäße Bodenleitsystem auch ohne einen Fachhandwerker verlegbar.

Eine Ausgestaltung sieht vor, dass die flächigen Leitelemente eine Mikrosaugnapffolie mit den Mikrosaugnäpfen aufweisen und dass die taktil erfassbaren Erhebungen auf einer den Mikrosaugnäpfen gegenüberliegenden Seite der Mikrosaugnapffolie befestigt sind. Je nach Ausführung kann die Mikrosaugnapffolie mit unterschiedlichen Erhebungen konfiguriert und versehen werden. Diese ermöglicht eine flexible Gestaltung der flächigen Leitelemente.

Es wird vorgeschlagen, dass die taktil erfassbaren Erhebungen als taktil erfassbare Elemente auf der den Mikrosaugnäpfen gegenüberliegenden Seite der Mikrosaugnapffolie aufgeklebt sind. Damit wird eine dauerhafte und einfach zu handhabende Befestigung erreicht. Die Erfindung ist aber nicht auf aufgeklebte, taktil erfassbare Erhebungen beschränkt. Die taktil erfassbaren Erhebungen können auch anderweitig auf der den Mikrosaugnäpfen gegenüberliegenden Seite der Mikrosaugnapffolie befestigt sein.

Die Mikrosaugnäpfe der Mikrosaugnapffolie sind mit bloßem Auge nicht sichtbar. Ein Grundträger der Mikrosaugnapffolie ist ein synthetisches Papier, das hauptsächlich aus einer Polypropylenfolie hergestellt wird, die anorganische Füllstoffe und geringe Mengen an Additiven zugesetzt werden. Im Prinzip wird die Folie durch biaxiales Recken unter Bildung von Mikrohohlräumen geformt. Die an der Auflagefläche gebildeten Mikrohohlräume sind dabei offen, wobei diese Mikrohohlräume dann die Mikrosaugnäpfe bilden. Damit haftet die Mikrosaugnapffolie über die Mikrosaugnäpfe auf vielen Oberflächen, insbesondere glatten Oberflächen (beispielsweise Glasoberflächen, Laminatbodenoberflächen, Parkettbodenoberflächen, PVC-Bodenbelagoberflächen oder dergleichen). Weiterhin können Mikrosaugnapffolien auch wieder rückstandslos von der betreffenden Oberfläche entfernt werden, indem die Mikrosaugnapffolie mit einer die Haftkraft der Mikrosaugnäpfe übersteigenden Kraft von der Oberfläche abgezogen wird. Die Haftung der Mikrosaugnapffolie wird dadurch erreicht, dass sich beim Auflegen und Andrücken der Mikrosaugnapffolie auf der betreffenden Oberfläche ein Unterdruck in den Mikrosaugnäpfe bildet.

In einer Ausführung sind die flächigen Leitelemente mehrschichtig aufgebaut, wobei die Leitelemente eine obere Lage sowie eine Mikrosaugnapffolie mit den Mikrosaugnäpfen aufweisen. Die obere Lage ist mit der Mikrosaugnapffolie verbunden und bildet die Oberseite der Leitelemente. Somit können verschiedenartig ausgeführte flächige Leitelemente erstellt werden, wobei lediglich die obere Lage angepasst werden muss.

Es wird vorgeschlagen, dass die obere Lage und die Mikrosaugnapffolie über eine Verklebung oder eine Laminierung miteinander verbunden sind.

Eine weitere Ausführung sieht vor, dass die obere Lage und die Mikrosaugnapffolie über eine Basisschicht miteinander verbunden sind. Dies ermöglicht insbesondere die Herstellung von flächigen Leitelemente in verschiedener Dicke. Unabhängig von der Dicke der flächigen Leitelemente kann dabei insbesondere eine einheitliche obere Lage sowie eine einheitliche Mikrosaugnapffolie eingesetzt werden. Die schlussendliche Dicke der flächigen Leitelemente wird in einfacher Weise über die Dicke der Basisschicht eingestellt.

Es wird vorgeschlagen, dass die obere Lage und die Basisschicht über eine Verklebung oder eine Laminierung miteinander verbunden sind und/oder dass die Mikrosaugnapffolie und die Basisschicht über eine Verklebung oder eine Laminierung miteinander verbunden sind.

In einer Ausgestaltung sind die taktil erfassbaren Erhebungen Noppenindikatoren und/oder Leitlinienindikatoren.

Die Dimensionen (Längen, Breiten und Höhen) der Noppenindikatoren und Leitlinienindikatoren richten sich vordergründig nach den gesetzlichen Vorgaben der für taktile Bodenleitsysteme (in Deutschland beispielsweise DIN 32984 oder entsprechende EU-Norm). Die Noppenindikatoren sind in der Regel Kegelstümpfe oder Kugelkalotten, welche in verschiedenen Rastern/Rastermaßen angeordnete werden. Leitlinienindikatoren (auch Rippenindikatoren genannt) sind trapezähnliche Erhebungen. Die Noppenindikatoren und Leitlinienindikatoren sind entweder stoffschlüssig oder mittels einer Verankerung (z.B. Verklebung) mit der oberen Lage verbunden. Die Noppenindikatoren und Leitlinienindikatoren werden vorzugsweise mit einem optischen Kontrast (durch entsprechende Farbgebung) von den zwischen den Noppenindikatoren bzw. Leitlinienindikatoren liegenden Flächen der oberen Lage abgehoben.

Die erfinderische Lösung ermöglicht es, durch Aneinanderlegen mehrerer Leitelemente verschiedene Leitstrecken, Aufmerksamkeitsfelder an Treppenstufen und/oder Abzweigfelder flexibel und in verschiedenen Flächengrößen auszubilden. Dabei werden insbesondere auch Leitelemente mit verschiedenartigen Erhebungen miteinander kombiniert - also beispielsweise Leitelemente mit Noppenindikatoren und Leitelemente mit Leitlinienindikatoren.

In einer vorteilhaften Ausführung weisen die Mikrosaugnäpfe in der Ebene der Auflagefläche eine laterale Ausdehnung im Bereich von 10 µm bis 70 µm auf.

Es wird vorgeschlagen, dass die Mikrosaugnäpfe in der Ebene der Auflagefläche eine laterale Ausdehnung im Bereich von 10 µm bis 50 µm aufweisen.

Die Auflagefläche enthält vorteilhafterweise Mikrosaugnäpfe mit verschiedenen lateralen Ausdehnungen in den genannten Bereichen. Ebenso ist aber auch eine Auflagefläche mit Mikrosaugnäpfe gleicher lateraler Ausdehnungen in dem genannten Bereich möglich.

In einer vorteilhaften Ausführung weist die Auflagefläche 10.000 bis 40.000 Mikrosaugnäpfe je cm² Auflagefläche auf.

Es wird vorgeschlagen, dass die Auflagefläche 15.000 bis 25.000 Mikrosaugnäpfe je cm² Auflagefläche aufweist.

Es versteht sich von selbst, dass sich die Anzahl der Mikrosaugnäpfe auch nach deren lateraler Ausdehnung richtet. Enthält die Mikrosaugnapffolie beispielsweise einheitlich dimensionierte Mikrosaugnäpfe mit einer lateralen Ausdehnung von 70 µm, wird sich die Anzahl der Mikrosaugnäpfe je cm² Auflagefläche im unteren Bereich der angegebenen Spanne bewegen. Bei kleinerer lateraler Ausdehnung der Mikrosaugnäpfe wird die Anzahl der Mikrosaugnäpfe je cm² Auflagefläche eher im oberen Bereich der angegebenen Spanne zu wählen sein. Letztlich wird die Anzahl der Mikrosaugnäpfe je cm² Auflagefläche aus einem Kompromiss zwischen Erzielung einer hohe Haftkraft und mechanischer Stabilität der Mikrosaugnapffolie zu finden sein.

Nachfolgend wird ein Ausführungsbeispiel der Erfindung anhand der Zeichnungen erläutert. Es zeigen:
- Fig. 1: eine Ausführung eines flächigen Leitelementes eines erfindungsgemäßen taktilen Bodenleitsystems zur Orientierung von blinden und sehbehinderten Menschen
- Fig. 2: eine weitere Ausführung eines flächigen Leitelementes
- Fig. 3: einen schematischen Querschnitt des Leitelementes gemäß Fig. 2 entlang der Schnittlinie AA'
- Fig. 4: einen alternativen Aufbau eines Leitelementes an einem schematischen Querschnitt des Leitelementes gemäß Fig. 2 entlang der Schnittlinie AA'
- Fig. 5: einen weiteren alternativen Aufbau eines Leitelementes an einem schematischen Querschnitt des Leitelementes gemäß Fig. 2entlang der Schnittlinie AA'
- Fig. 6: einen Ausschnitt einer Ausführung der Mikrosaugnapffolie mit Blick auf die Auflagefläche
- Fig. 7: einen Ausschnitt einer weiteren Ausführung der Mikrosaugnapffolie mit Blick auf die Auflagefläche

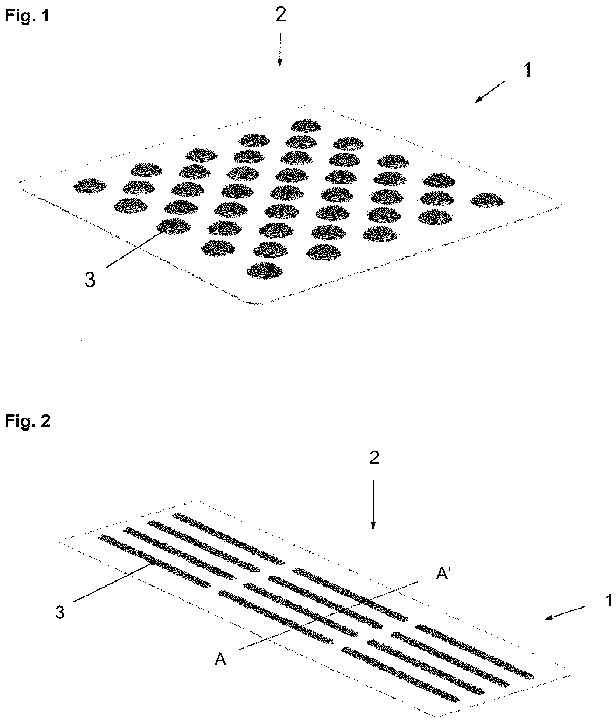

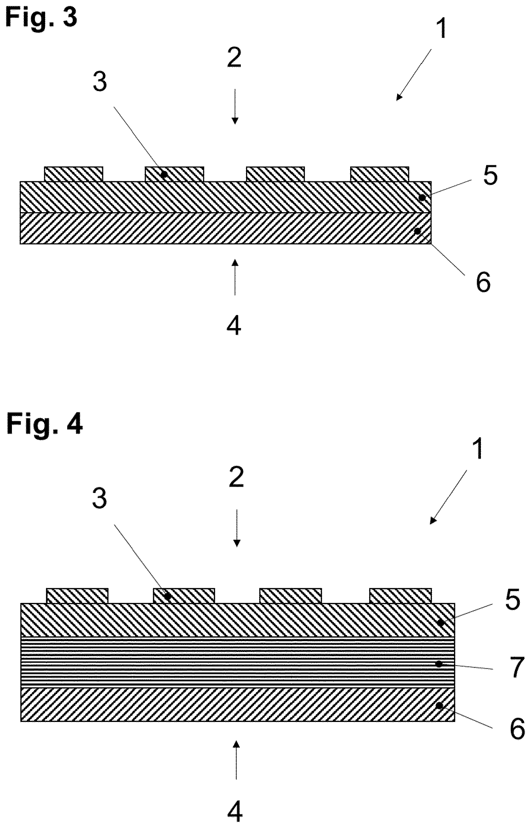

**Fig. 1** zeigt eine Ausführung eines flächigen Leitelementes 1 eines erfindungsgemäßen taktilen Bodenleitsystems zur Orientierung von blinden und sehbehinderten Menschen. An der Oberseite 2 sind von blinden und sehbehinderten Menschen taktil erfassbare Erhebungen 3 ausgebildet. In der dargestellten Ausführung sind die taktil erfassbaren Erhebungen 3 Noppenindikatoren (im Raster angeordnete Kegelstümpfe). Das Leitelement 1 liegt mit einer Auflagefläche 4 (Fig. 3) auf einem zum markierenden Boden auf. Der Boden ist in **Fig. 1** nicht dargestellt. Die Auflagefläche 4 ist auf der in **Fig. 1** nicht sichtbaren Unterseite des Leitelementes 1 angeordnet. Die nicht sichtbare Unterseite liegt auf der zur Oberseite 2 gegenüberliegenden Seite des Leitelementes 1.

**Fig. 2** zeigt eine weitere Ausführung eines flächigen Leitelementes 1 eines erfindungsgemäßen taktilen Bodenleitsystems zur Orientierung von blinden und sehbehinderten Menschen. In der dargestellten Ausführung sind die an der Oberseite 2 des Leitelementes 1 liegenden taktil erfassbaren Erhebungen 3 Leitlinien (im Raster angeordnete linienartige Erhebungen). Auch hier ist die Auflagefläche 4 (mit der das Leitelement 1 auf Rippenindikatoren genannt) sind trapezähnliche Erhebungen. Die Noppenindikatoren und Leitlinienindikatoren sind entweder stoffschlüssig oder mittels einer Verankerung (z.B. Verklebung) mit der oberen Lage verbunden. Die Noppenindikatoren und Leitlinienindikatoren werden vorzugsweise mit einem optischen Kontrast (durch entsprechende Farbgebung) von den zwischen den Noppenindikatoren bzw. Leitlinienindikatoren liegenden Flächen der oberen Lage abgehoben.

Die erfinderische Lösung ermöglicht es, durch Aneinanderlegen mehrerer Leitelemente verschiedene Leitstrecken, Aufmerksamkeitsfelder an Treppenstufen und/oder Abzweigfelder flexibel und in verschiedenen Flächengrößen auszubilden. Dabei werden insbesondere auch Leitelemente mit verschiedenartigen Erhebungen miteinander kombiniert - also beispielsweise Leitelemente mit Noppenindikatoren und Leitelemente mit Leitlinienindikatoren.

Erfindungsgemäß weisen die Mikrosaugnäpfe in der Ebene der Auflagefläche eine laterale Ausdehnung im Bereich von 10 µm bis 70 µm auf.

Es wird vorgeschlagen, dass die Mikrosaugnäpfe in der Ebene der Auflagefläche eine laterale Ausdehnung im Bereich von 10 µm bis 50 µm aufweisen.

Die Auflagefläche enthält vorteilhafterweise Mikrosaugnäpfe mit verschiedenen lateralen Ausdehnungen in den genannten Bereichen. Ebenso ist aber auch eine Auflagefläche mit Mikrosaugnäpfe gleicher lateraler Ausdehnungen in dem genannten Bereich möglich.

In einer vorteilhaften Ausführung weist die Auflagefläche 10.000 bis 40.000 Mikrosaugnäpfe je cm² Auflagefläche auf.

Es wird vorgeschlagen, dass die Auflagefläche 15.000 bis 25.000 Mikrosaugnäpfe je cm² Auflagefläche aufweist.

Es versteht sich von selbst, dass sich die Anzahl der Mikrosaugnäpfe auch nach deren lateraler Ausdehnung richtet. Enthält die Mikrosaugnapffolie beispielsweise einheitlich dimensionierte Mikrosaugnäpfe mit einer lateralen Ausdehnung von 70 µm, wird sich die Anzahl der Mikrosaugnäpfe je cm² Auflagefläche im unteren Bereich der angegebenen Spanne bewegen. Bei kleinerer lateraler Ausdehnung der Mikrosaugnäpfe wird die Anzahl der Mikrosaugnäpfe je cm² Auflagefläche eher im oberen Bereich der angegebenen Spanne zu wählen sein. Letztlich wird die Anzahl der Mikrosaugnäpfe je cm² Auflagefläche aus einem aufgeklebt oder anderwärtig fest aufgebracht oder installiert). Die Mikrosaugnäpfe 6a sind auf einer den taktil erfassbaren Erhebungen 3 abgewandten Seite der Mikrosaugnapffolie 6 angeordnet.

Die Mikrosaugnäpfe 6a weisen in der Ebene der Auflagefläche eine laterale Ausdehnung im Bereich von 10 µm bis 70 µm, bevorzugt im Bereich von 10 µm bis 50 µm, auf. Die Auflagefläche enthält dabei Mikrosaugnäpfe 6a mit verschiedenen lateralen Ausdehnungen in dem genannten Bereich. Eine Auflagefläche mit Mikrosaugnäpfen 6a verschiedener lateraler Ausdehnungen kann die Haftung bei weniger glatten Oberflächen verbessern. Alternativ ist aber auch eine Auflagefläche mit Mikrosaugnäpfen 6a gleicher lateraler Ausdehnungen in dem genannten Bereich möglich.

Die Auflagefläche weist 10.000 bis 40.000, bevorzugt 15.000 bis 25.000, Mikrosaugnäpfe 6a je cm² Auflagefläche auf.

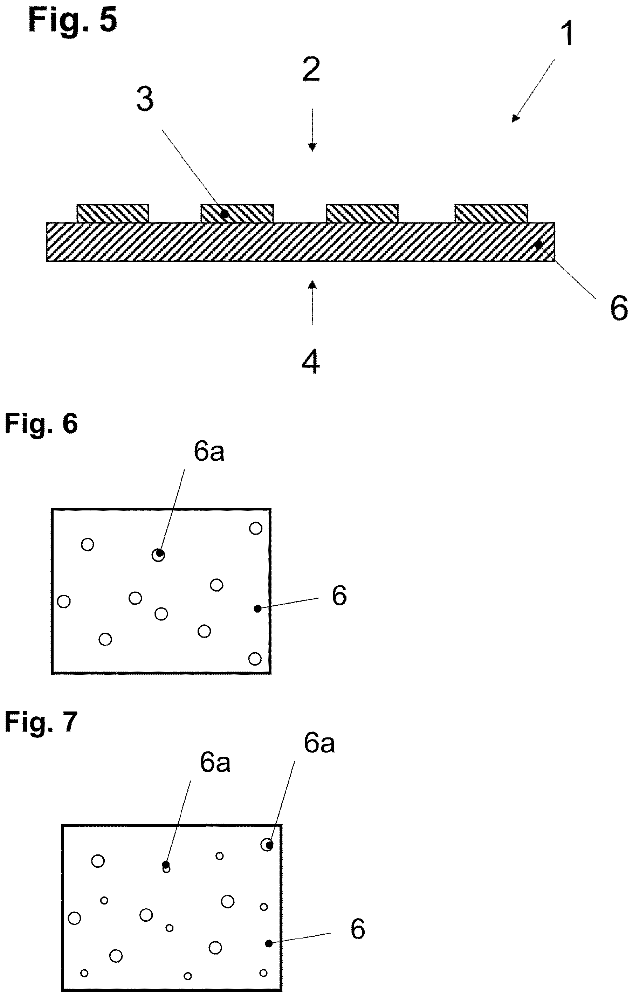

**Fig. 6** zeigt einen Ausschnitt einer Ausführung der Mikrosaugnapffolie 6 mit Blick auf die Auflagefläche 4. Dieser Ausschnitt weist zehn Mikrosaugnäpfe 6a auf. In dieser Ausführung haben die Mikrosaugnäpfen 6a in der Ebene der Auflagefläche gleiche laterale Ausdehnungen.

**Fig. 7** zeigt einen Ausschnitt einer weiteren Ausführung der Mikrosaugnapffolie 6 ebenfalls mit Blick auf die Auflagefläche 4. Dieser Ausschnitt weist fünfzehn Mikrosaugnäpfe 6a auf. In dieser Ausführung haben die Mikrosaugnäpfen 6a in der Ebene der Auflagefläche verschiedene laterale Ausdehnungen.

### Bezugszeichenliste

- 1: Leitelement
- 2: Oberseite
- 3: taktile Erhebung
- 4: Auflagefläche
- 5: obere Lage
- 6: Mikrosaugnapffolie
- 6a: Mikrosaugnapf
- 7: Basisschicht

## Patentansprüche

1. Taktiles Bodenleitsystem zur Orientierung von blinden und sehbehinderten Menschen, wobei das Bodenleitsystem flächige Leitelemente aufweist und diese Leitelemente eine Oberseite und eine Auflagefläche aufweisen, wobei an der Oberseite verschiedenartige, von blinden und sehbehinderten Menschen taktil erfassbare Erhebungen ausgebildet sind und wobei die Leitelemente mit der Auflagefläche auf einem zum markierenden Boden aufliegen, **dadurch gekennzeichnet, dass** die Auflagefläche (4) mit Mikrosaugnäpfen (6a) versehen ist und diese Mikrosaugnäpfe (6a) auf dem Boden aufliegen und dass die Mikrosaugnäpfe (6a) in der Ebene der Auflagefläche (4) eine laterale Ausdehnung im Bereich von 10 µm bis 70 µm aufweisen.

2. Taktiles Bodenleitsystem nach Anspruch 1, **dadurch gekennzeichnet, dass** die flächigen Leitelemente (1) eine Mikrosaugnapffolie (6) mit den Mikrosaugnäpfen (6a) aufweisen und dass die taktil erfassbaren Erhebungen (3) auf einer den Mikrosaugnäpfen (6a) gegenüberliegenden Seite der Mikrosaugnapffolie (6) befestigt sind.

3. Taktiles Bodenleitsystem nach Anspruch 2, **dadurch gekennzeichnet, dass** die taktil erfassbaren Erhebungen (3) auf der den Mikrosaugnäpfen (6a) gegenüberliegenden Seite der Mikrosaugnapffolie (6) aufgeklebt sind.

4. Taktiles Bodenleitsystem nach Anspruch 1, **dadurch gekennzeichnet, dass** die flächigen Leitelemente (3) mehrschichtig aufgebaut sind und eine obere Lage (5) sowie eine Mikrosaugnapffolie (6) mit den Mikrosaugnäpfen (6a) aufweisen und dass die obere Lage (5) mit einer den Mikrosaugnäpfen (6a) gegenüberliegenden Seite der Mikrosaugnapffolie (6) verbunden ist und die Oberseite (2) der Leitelemente (1) bildet.

5. Taktiles Bodenleitsystem nach Anspruch 4, **dadurch gekennzeichnet, dass** die obere Lage (5) und die Mikrosaugnapffolie (6) über eine Verklebung oder eine Laminierung miteinander verbunden sind.

6. Taktiles Bodenleitsystem nach Anspruch 4, **dadurch gekennzeichnet, dass** die obere Lage (5) und die Mikrosaugnapffolie (6) über eine Basisschicht (7) miteinander verbunden sind.

7. Taktiles Bodenleitsystem nach Anspruch 6, **dadurch gekennzeichnet, dass** die obere Lage (5) und die Basisschicht (7) über eine Verklebung oder eine Laminierung miteinander verbunden sind und/oder dass eine der Mikrosaugnäpfen (6a) gegenüberliegende Seite der Mikrosaugnapffolie (6) und die Basisschicht (7) über eine Verklebung oder eine Laminierung miteinander verbunden sind.

8. Taktiles Bodenleitsystem nach einem der vorgenannten Ansprüche, **dadurch gekennzeichnet, dass** die taktil erfassbaren Erhebungen (3) Noppenindikatoren und/oder Leitlinien sind.

9. Taktiles Bodenleitsystem nach einem der vorgenannten Ansprüche, **dadurch gekennzeichnet, dass** die Mikrosaugnäpfe (6a) in der Ebene der Auflagefläche (4) eine laterale Ausdehnung im Bereich von 10 µm bis 50 µm aufweisen.

10. Taktiles Bodenleitsystem nach einem der vorgenannten Ansprüche, **dadurch gekennzeichnet, dass** die Auflagefläche (4) 10.000 bis 40.000 Mikrosaugnäpfe (6a) je cm² Auflagefläche (4) aufweist.

11. Taktiles Bodenleitsystem nach Anspruch 10, **dadurch gekennzeichnet, dass** die Auflagefläche (4) 15.000 bis 25.000 Mikrosaugnäpfe (6a) je cm² Auflagefläche (4) aufweist.

## Claims

1. Tactile floor guidance system for orienting blind and visually impaired persons, wherein the floor guidance system comprises flat guide elements and these guide elements comprise an upper side and a support surface, wherein various types of raised structures that can be detected by touch by blind and visually impaired persons are formed on the upper side, and wherein the guide elements rest with the support surface on a floor to be marked, **characterised in that** the support surface (4) is provided with micro suction cups (6a), these micro suction cups (6a) resting on the floor, and **in that** the micro suction cups (6a) have, in the plane of the support surface (4), a lateral extension in the range from 10 µm to 70 µm.

2. Tactile floor guidance system according to claim 1, **characterised in that** the flat guide elements (1) comprise a micro suction cup film (6) with the micro suction cups (6a), and **in that** the raised structures (3) that can be detected by touch are fastened on a side of the micro suction cup film (6) opposite the micro suction cups (6a).

3. Tactile floor guidance system according to claim 2, **characterised in that** the raised structures (3) that can be detected by touch are adhesively bonded to the side of the micro suction cup film (6) opposite the micro suction cups (6a).

4. Tactile floor guidance system according to claim 1, **characterised in that** the flat guide elements (1) have a multilayer structure and comprise an upper layer (5) and a micro suction cup film (6) with the micro suction cups (6a), and **in that** the upper layer (5) is connected to a side of the micro suction cup film (6) opposite the micro suction cups (6a) and forms the upper side (2) of the guide elements (1).

5. Tactile floor guidance system according to claim 4, **characterised in that** the upper layer (5) and the micro suction cup film (6) are connected to one another by adhesive bonding or lamination.

6. Tactile floor guidance system according to claim 4, **characterised in that** the upper layer (5) and the micro suction cup film (6) are connected to one another via a base layer (7).

7. Tactile floor guidance system according to claim 6, **characterised in that** the upper layer (5) and the base layer (7) are connected to one another by adhesive bonding or lamination, and/or **in that** a side of the micro suction cup film (6) opposite the micro suction cups (6a) and the base layer (7) are connected to one another by adhesive bonding or lamination.

8. Tactile floor guidance system according to one of the preceding claims, **characterised in that** the raised structures (3) that can be detected by touch are stud indicators and/or guide lines.

9. Tactile floor guidance system according to one of the preceding claims, **characterised in that** the micro suction cups (6a) have, in the plane of the support surface (4), a lateral extension in the range from 10 µm to 50 µm.

10. Tactile floor guidance system according to one of the preceding claims, **characterised in that** the support surface (4) comprises 10,000 to 40,000 micro suction cups (6a) per cm² of support surface (4).

11. Tactile floor guidance system according to claim 10, **characterised in that** the support surface (4) comprises 15,000 to 25,000 micro suction cups (6a) per cm² of support surface (4).

## Revendications

1. Système de guidage tactile au sol destiné à l'orientation des personnes aveugles et malvoyantes, le système de guidage au sol comportant des éléments de guidage plats, lesquels présentent une face supérieure et une surface d'appui, des reliefs de différents types, perceptibles au toucher par les personnes aveugles et malvoyantes, étant formés sur la face supérieure, et les éléments de guidage reposant par leur surface d'appui sur le sol à marquer, **caractérisé en ce que** la surface d'appui (4) est pourvue de micro-ventouses (6a) et que ces micro-ventouses (6a) reposent sur le sol, et **en ce que** les micro-ventouses (6a) présentent, dans le plan de la surface d'appui (4), une extension latérale comprise entre 10 µm et 70 µm.

2. Système de guidage tactile au sol selon la revendication 1, **caractérisé en ce que** les éléments de guidage plats (1) présentent un film à micro-ventouses (6) comportant les micro-ventouses (6a) et **en ce que** les reliefs (3) détectables au toucher sont fixés sur un côté du film à micro-ventouses (6) opposé aux micro-ventouses (6a).

3. Système de guidage tactile au sol selon la revendication 2, **caractérisé en ce que** les reliefs (3) détectables au toucher sont collés sur le côté du film à micro-ventouses (6) opposé aux micro-ventouses (6a).

4. Système de guidage tactile au sol selon la revendication 1, **caractérisé en ce que** les éléments de guidage plats (1) sont constitués de plusieurs couches et présentent une couche supérieure (5) ainsi qu'un film à micro-ventouses (6) comportant les micro-ventouses (6a) et **en ce que** la couche supérieure (5) est reliée à un côté du film à micro-ventouses (6) opposé aux micro-ventouses (6a) et forme la face supérieure (2) des éléments de guidage (1).

5. Système de guidage tactile au sol selon la revendication 4, **caractérisé en ce que** la couche supérieure (5) et le film à micro-ventouses (6) sont reliés l'une à l'autre par collage ou stratification.

6. Système de guidage tactile au sol selon la revendication 4, **caractérisé en ce que** la couche supérieure (5) et le film à micro-ventouses (6) sont reliés l'une à l'autre par une couche de base (7).

7. Système de guidage tactile au sol selon la revendication 6, **caractérisé en ce que** la couche supérieure (5) et la couche de base (7) sont reliées l'une à l'autre par collage ou stratification et/ou **en ce qu'**un côté du film à micro-ventouses (6) opposé aux micro-ventouses (6a) et la couche de base (7) sont reliés l'un à l'autre par collage ou stratification.

8. Système de guidage tactile au sol selon l'une des revendications précédentes, **caractérisé en ce que** les reliefs (3) détectables au toucher sont des indicateurs à picots et/ou des lignes de guidage.

9. Système de guidage au sol tactile selon l'une des revendications précédentes, **caractérisé en ce que** les micro-ventouses (6a) présentent, dans le plan de la surface d'appui (4), une extension latérale comprise entre 10 µm et 50 µm.

10. Système de guidage tactile au sol selon l'une des revendications précédentes, **caractérisé en ce que** la surface d'appui (4) comporte 10 000 à 40 000 micro-ventouses (6a) par cm² de surface d'appui (4).

11. Système de guidage tactile au sol selon la revendication 10, **caractérisé en ce que** la surface d'appui (4) comporte 15 000 à 25 000 micro-ventouses (6a) par cm² de surface d'appui (4).
